# EUROPEAN PATENT SPECIFICATION

(11) **EP 4 290 199 B1**
(45) Date of publication and mention of the grant of the patent: **10.09.2025**
(21) Application number: 22895948.2
(22) Date of filing: 08.11.2022
(51) Int. Cl.: G01K 17/10, G01K 19/00, G06N 3/02, G06N 5/01, G06N 20/00, G05B 23/02, G06Q 10/0635, G06Q 10/20, G06Q 30/01, G06Q 30/0283, G06Q 30/04, G06Q 50/06

(54) **HEAT METER ABNORMALITY DETERMINATION DEVICE AND METHOD THEREOF**
VORRICHTUNG ZUR BESTIMMUNG VON ANOMALIEN EINES WÄRMEZÄHLERS UND VERFAHREN DAFÜR
DISPOSITIF DE DÉTERMINATION D'ANOMALIE DE COMPTEUR DE CHALEUR ET PROCÉDÉ ASSOCIÉ

(30) Priority: 16.11.2021 KR 20210157409
(43) Date of publication of application: 13.12.2023
(73) Proprietor: Korea Institute of Energy Research, Daejeon 34129 (KR)
(72) Inventor: KIM, Dong Woo, Daejeon 34085 (KR); LEE, Jae Yong, Daejeon 34130 (KR); TAK, Hyun Woo, Daejeon 34074 (KR); KIM, Seong Eun, Cheonan-si Chungcheongnam-do 31158 (KR)
(74) Representative: Brevalex
(86) International application number: PCT/KR2022/017386
(87) International publication number: WO 2023/090741

(56) References cited:
- EP-A1- 3 096 118
- CN-A- 107 835 220
- CN-A- 111 984 697
- JP-A- 2017 138 789
- KR-A- 20200 054 673
- KR-B1- 101 030 812
- US-A1- 2020 379 454
- PALASZ PRZEMYSLAW ET AL: "Using different ML algorithms and hyperparameter optimization to predict heat meters' failures", APPLIED SCIENCES 2019, 9(18), 3719 (SPECIAL ISSUE SMART BUILDINGS FOR DECARBONISED ENERGY SYSTEMS), 6 September 2019 (2019-09-06), Basel, Switzerland, pages 1 - 17, XP093236555, Retrieved from the Internet <URL:https://www.mdpi.com/2076-3417/9/18/3719> [retrieved on 20250107], DOI: 10.3390/app9183719

## Description

### [Technical Field]

The present invention relates to a device and method for determining an abnormality in a calorimeter.

### [Background Art]

Central heating or district heating is a heating scheme that supplies the heating medium (e.g., hot water) produced from large-scale heat source facilities to multiple households located in various buildings, such as apartments, houses, shopping malls, and offices through pipes to the buildings. Central heating or district heating is highly safe because there is no need to install heating equipment which is explosive or risky in each of multiple households. Further, central heating or district heating may minimize heat loss in the process of producing heat on a large scale.

In this case, a plurality of households using central heating or district heating pay the cost according to the amount of heat used by each household. Therefore, a calorimeter for measuring the amount of heat used by each of a plurality of households may be installed in each household.

Meanwhile, calorimeters installed in multiple households are difficult to maintain regularly and are often used beyond their guaranteed lifetime. Further, the calorimeter has a high possibility of physical failure due to its structure and has a high chance of failure due to the inexperienced installation of the worker. Further, since it is difficult for people living in each household to determine whether the calorimeter fails, it is highly likely that the calorimeter remains out of order.

If all or some of the calorimeters installed in multiple households fail, there may be a fairness issue in distributing charges according to the use of calories to multiple households. Therefore, the managing office that supplies heat to multiple households needs to periodically identify whether the calorimeters installed in multiple households are out of order.

However, it is realistically difficult for the managing office to periodically send a meter reader to check any malfunctions in calorimeters installed in multiple households.

Further, the managing office needs to accurately identify the cause of the failure as well as whether the calorimeters installed in multiple households are out of order. This is because the method for repairing a failure differs and how urgent the failure should be treated depending on the cause of the failure. The prior art documents EP 3 096 118; Palasz Przemyslaw et al., Applied Sciences 2019; and US 2020/379454 discuss methods related to calorimeter failure detection and maintenance.

If the cause of the calorimeter's failure is not accurately identified, the time it takes the meter reader to troubleshoot the calorimeter may increase, and sometimes, the meter reader may have to revisit the household with the failed calorimeter.

### [Detailed Description of the Invention]

### [Technical Problem]

Embodiments provide a calorimeter abnormality determination device and method capable of efficiently maintaining and repairing calorimeters installed in multiple households by a small number of personnel.

Further, embodiments provide a calorimeter abnormality determination device and method capable of quickly repairing a calorimeter in which a high-risk failure occurs.

However, the objects of the embodiments are not limited thereto, and other objects may also be present.

[Technical Solution] The invention is defined by the annexed claims. An embodiment provides a calorimeter abnormality determination device comprising a collecting device collecting measurement data from a plurality of calorimeters each measuring a calorie consumed in a specific household and a failure determination device determining whether the plurality of calorimeters fail.

In this case, the failure determination device may include a receiving unit receiving the measurement data from the collecting device, a failure probability determination unit inputting the measurement data to a first machine learning model to determine failure probability information about the plurality of calorimeters, a failure cause determination unit inputting the measurement data to a second machine learning model to determine failure cause information about the plurality of calorimeters, wherein the second machine learning model is different from the first machine learning model, and a repair priority determination unit determining a priority for a target calorimeter, which is one or more calorimeters among the plurality of calorimeters, based on the failure probability information and the failure cause information.

Another embodiment provides a calorimeter abnormality determination method comprising collecting measurement data from a plurality of calorimeters each measuring a calorie consumed in a specific household, receiving the measurement data, inputting the measurement data to a first machine learning model to determine failure probability information about the plurality of calorimeters, inputting the measurement data to a second machine learning model to determine failure cause information about the plurality of calorimeters, wherein the second machine learning model is different from the first machine learning model, and determining a repair priority for a target calorimeter, which is one or more calorimeters among the plurality of calorimeters, based on the failure probability information and the failure cause information.

### [Advantageous Effects]

By the calorimeter failure determination device and method according to embodiments, it is possible to efficiently maintain and repair calorimeters installed in multiple households by a small number of personnel and to quickly repair a calorimeter in which a high-risk failure occurs.

### [Brief Description of Drawings]

FIG. 1 is a view illustrating a configuration of a calorimeter abnormality determination device according to an embodiment;
FIG. 2 is a view illustrating a configuration of the failure determination device of FIG. 1;
FIG. 3 is a view illustrating an operation of measuring the calorie by a calorimeter and heat rate determined according to the measured calorie according to an embodiment;
FIG. 4 is a view illustrating an example of measurement data according to an embodiment;
FIG. 5 is a view illustrating another example of measurement data according to an embodiment;
FIG. 6 is a view illustrating a first machine learning model according to an embodiment;
FIG. 7 is a view illustrating a second machine learning model according to an embodiment;
FIG. 8 is a view illustrating an operation of determining a target calorimeter by a priority determination unit according to an embodiment;
FIG. 9 is a view illustrating an operation of determining a repair priority of a target calorimeter by a priority determination unit according to an embodiment;
FIG. 10 is a view illustrating an operation of determining a repair priority of a target calorimeter using a third machine learning model by a priority determination unit according to an embodiment; and
FIG. 11 is a flowchart illustrating a calorimeter abnormality determination method according to an embodiment.

### [Mode for Carrying out the Invention]

Hereinafter, embodiments of the present invention are described in detail with reference to the accompanying drawings. The same or substantially the same reference denotations are used to refer to the same or substantially the same elements throughout the specification and the drawings. When determined to make the subject matter of the present invention unclear, the detailed description of the known configurations or functions may be skipped.

Such denotations as "first," "second," "A," "B," "(a)," and "(b)," may be used in describing the components of the present invention. These denotations are provided merely to distinguish a component from another, and the essence of the components is not limited by the denotations in light of order or sequence. When a component is described as "connected," "coupled," or "linked" to another component, the component may be directly connected or linked to the other component, but it should also be appreciated that other components may be "connected," "coupled," or "linked" between the components.

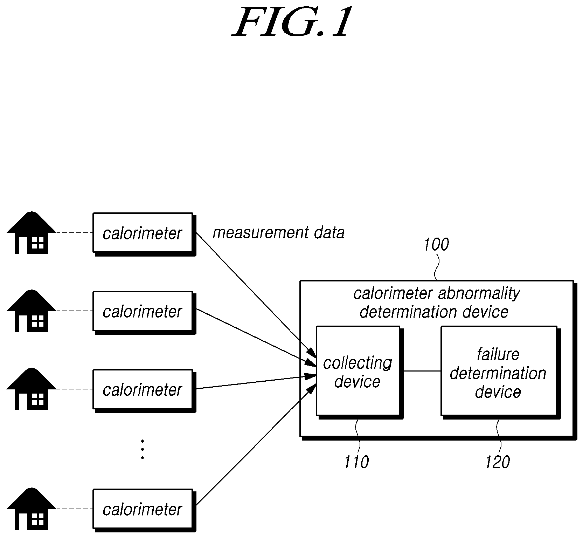

FIG. 1 is a view illustrating a configuration of a calorimeter abnormality determination device 100 according to an embodiment.

Referring to FIG. 1, the calorimeter abnormality determination device 100 may include a collecting device 110 and a failure determination device 120.

The collecting device 110 may collect measurement data from a plurality of calorimeters. The plurality of calorimeters each may be installed in a specific household to measure consumed calorie and transmit measurement data to the collecting device 110.

The measurement data may be traction driver from the plurality of calorimeters to the collecting device 110 through a communication protocol defined to transmit/receive data between the plurality of calorimeters and the collecting device 110. In this case, the communication protocol may be a wired communication protocol (e.g., LAN, PPP) or a wireless communication protocol (e.g., WLAN, 3G, LTE, 5G, Zigbee, Bluetooth, IR).

The failure determination device 120 may determine the failure probability and cause of failure for the plurality of calorimeters based on the measurement data collected by the collecting device 110.

Meanwhile, the calorimeter abnormality determination device 100 and the collecting device 110 and failure determination device 120 included in the calorimeter abnormality determination device 100 may be implemented in various manners.

As an example, the calorimeter abnormality determination device 100 may be any one of the plurality of calorimeters. In other words, any one of the plurality of calorimeters may collect measurement data from itself and the other calorimeters and determine the failure probability and cause of failure for the plurality of calorimeters based on the collected measurement data. In this case, the collecting device 110 may be a communication module included in any one of the plurality of calorimeters, and the failure determination device 120 may be a computing device included in any one of the plurality of calorimeters.

As another example, the calorimeter abnormality determination device 100 may be a relay to collect measurement data from the plurality of calorimeters. In other words, the relay may collect measurement data from the plurality of calorimeters and directly determine the failure probability and cause of failure for the plurality of calorimeters based on the collected measurement data.

As another example, the calorimeter abnormality determination device 100 may be a server that stores the measurement data collected from the plurality of calorimeters. In other words, the server may store the measurement data collected from the plurality of calorimeters and determine the failure probability and cause of failure for the plurality of calorimeters based on the stored measurement data.

As another example, the calorimeter abnormality determination device 100 may be a device that includes a plurality of calorimeters, a relay, and a server. In this case, the collecting device 110 may be included in a plurality of calorimeters, some of the modules included in the failure determination device 120 may be included in a plurality of calorimeters, and the rest may be included in a relay or a server.

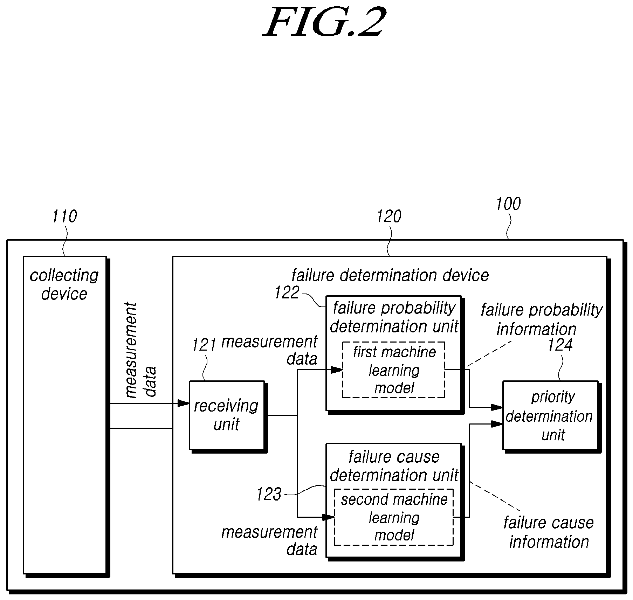

FIG. 2 is a view illustrating a configuration of the failure determination device 120 of FIG. 1.

Referring to FIG. 2, the failure determination device 120 may include a receiving unit 121, a failure probability determination unit 122, a failure cause determination unit 123, and a priority determination unit 124.

The receiving unit 121 may receive measurement data from the collecting device 110. The receiving unit 121 may transmit the received measurement data to the failure probability determination unit 122 and the failure cause determination unit 123.

Meanwhile, when the receiving unit 121 transmits the received measurement data to the failure probability determination unit 122 and the failure cause determination unit 123, a preprocessing operation may be performed on the measurement data. As an example, the portion determined to be noise, of the measurement data, may be removed during transmission to the failure probability determination unit 122 and the failure cause determination unit 123. As another example, the data measured in duplicate within a predetermined time period for the same household, of the measurement data, may be removed during transmission to the failure probability determination unit 122 and the failure cause determination unit 123.

The failure probability determination unit 122 may input the measurement data to a first machine learning model to determine failure probability information about the plurality of calorimeters.

In embodiments of the present invention, the failure probability information may be represented as a value between a first value (e.g., 0) and a second value (e.g.,1). Hereinafter, an example in which as the value of the failure probability information decreases, the probability of a failure increases is described in connection with embodiments of the present invention, but it may also be set that as the value of the failure probability information decreases, the probability of a failure reduces.

The failure cause determination unit 123 may input the measurement data to a second machine learning model to determine failure cause information about the plurality of calorimeters.

In embodiments of the present invention, the failure cause information may be represented as a code value (e.g., 03: flow chamber abnormality / 06: flow rate sensor failure / 10: temperature sensor installation suspicion error / 13: suspicious of constant flow valve failure) determined according to the cause of failure.

As described above, in the present invention, the failure determination device 120 may determine the failure probability information and the failure cause information using different machine learning models. This is why the machine learning model optimized to determine the failure probability information may cause an error while determining the failure cause information, and the machine learning model optimized to determine the failure cause information may cause an error in determining the failure probability information. Therefore, in the present invention, the operations of determining failure probability information and failure cause information using different machine learning models and processing failures in a plurality of calorimeters by combining of the results are described.

The priority determination unit 124 may determine the repair priority for target calorimeters which are one or more calorimeters among the plurality of calorimeters based on the failure cause information determined by the failure cause determination unit 123 and the failure probability information determined by the failure probability determination unit 122.

If the repair priority for the target calorimeter is determined only with the failure probability information, repair personnel need to visit the household to find the cause of failure and perform repair according to the cause of failure because the cause of failure is not known. Thus, the time required to treat the failure increases. In particular, the time may be delayed while the repair personnel receives a permission to enter the household to repair the failed calorimeter.

On the other hand, in the case where the repair priority is determined for the target calorimeter only with the failure cause information, if an issue occurs in multiple households, the repair personnel need to visit the households at issue one by one to check the severity of the failure because it cannot be known which household has a more severe failure.

Accordingly, in the present invention, both the failure probability information and the failure cause information may be used to determine the repair priority for the target calorimeter.

Meanwhile, the receiving unit 121, the failure probability determination unit 122, the failure cause determination unit 123, and the priority determination unit 124 included in the failure determination device 120 may be implemented in various manners.

As an example, the receiving unit 121, the failure probability determination unit 122, the failure cause determination unit 123, and the priority determination unit 124 may be implemented in separate hardware modules included in the failure determination device 120.

As another example, the receiving unit 121, the failure probability determination unit 122, the failure cause determination unit 123, and the priority determination unit 124 may be implemented as software modules driven by a logic operation device (e.g., a processor) included in the failure determination device 120. In this case, the logic operation device included in the failure determination device 120 may load and execute the firmware code recording the operations of the receiving unit 121, the failure probability determination unit 122, the failure cause determination unit 123, and the priority determination unit 124 to execute the receiving unit 121, the failure probability determination unit 122, the failure cause determination unit 123, and the priority determination unit 124, respectively.

As another example, the receiving unit 121 may be implemented as a communication module to perform communication with the collecting device 110, and the failure probability determination unit 122, the failure cause determination unit 123, and the priority determination unit 124 may be implemented as software modules driven by a logic operation device (e.g., a processor) included in the failure determination device 120.

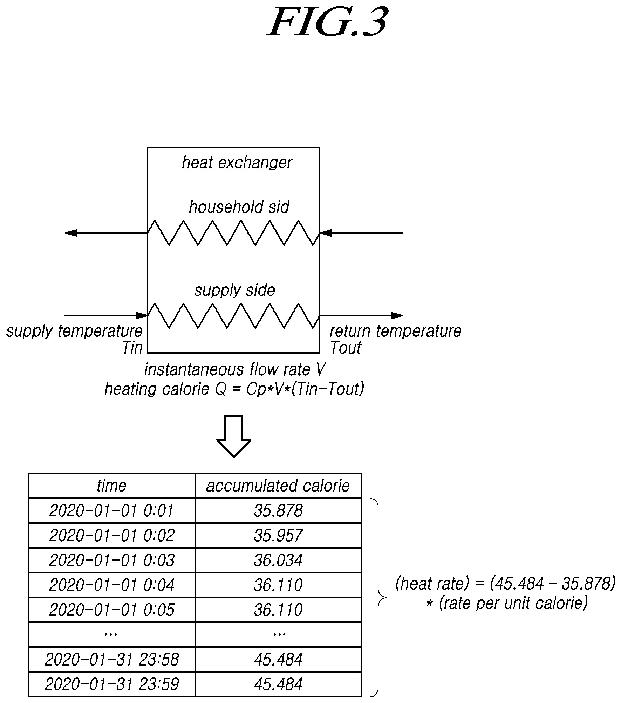

FIG. 3 is a view illustrating an operation of measuring the calorie by a calorimeter and heat rate determined according to the measured calorie according to an embodiment.

Referring to FIG. 3, the supply side (e.g., heat source facility) supplying calorie may supply a medium (e.g., hot water) to a heat exchanger. The medium supplied to the heat exchanger may supply heat to the household and then return to the heat exchanger. In this case, the temperature of the medium is transferred to the household, so that the temperature of the medium is decreased.

In this case, when the supply temperature of the medium supplied to the heat exchanger is Tin, the return temperature of the medium recovered from the heat exchanger is Tout, and the instantaneous flow rate is V, the heating calorie supplied to the household may be calculated as Q = Cp*V*(Tin - Tout). (Cp: specific heat of medium)

For example, the supply temperature may be the temperature of the supply pipe for supplying the medium, and the return temperature may be the temperature of the recovery pipe through the medium is recovered. Further, the instantaneous flow rate may be the flow rate of the medium passing through the heat exchanger for a specific unit time (e.g., 1 minute/10 minutes/1 hour) at a specific point in time. Meanwhile, the value of the instantaneous flow rate may be determined to be 0 or more.

The calorimeter may calculate the calorie supplied to the household for every unit of time (e.g., 1 minute) and accumulate the calories from a reference time to calculate the accumulated calorie supplied to the household from the reference time.

The heat rate to each household may be determined based on the calculated accumulated calories. For example, if the accumulated calorie calculated at 2020-01-01 0:01 is 35.878 and the accumulated calorie calculated at 2020-01-31 23:59 is 45.484, the heat rate will be charged for (45.484-35.878) = 9.606.

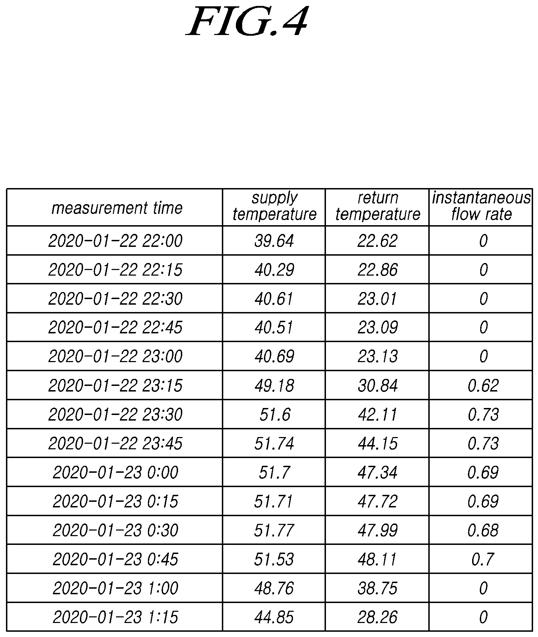

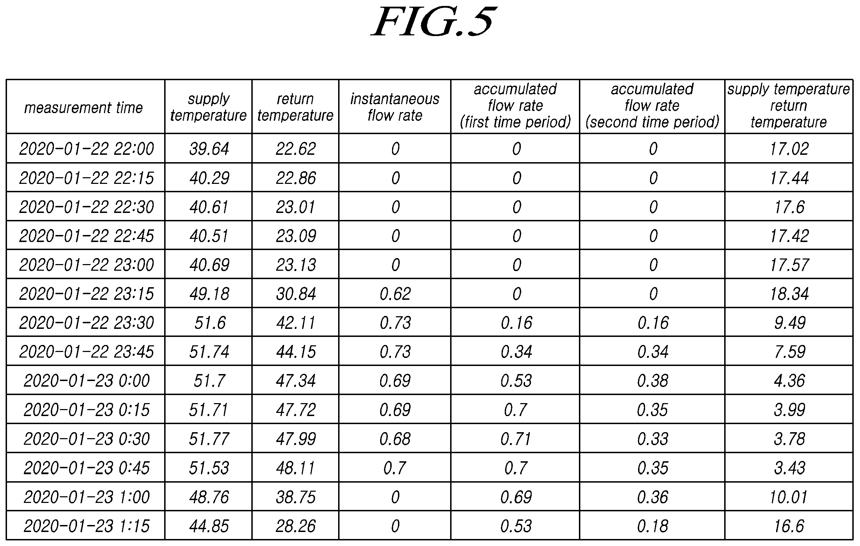

Accordingly, the measurement data measured from the plurality of calorimeters may include information necessary for determining the heat rate. Hereinafter, a specific example of measurement data is described with reference to FIGS. 4 and 5.

FIG. 4 is a view illustrating an example of measurement data according to an embodiment.

Referring to FIG. 4, measurement data may include the supply temperature, return temperature, and instantaneous flow rate for a specific measurement time.

In FIG. 4, the measurement data may include information indicating that the supply temperature is 39.64 degrees, the return temperature is 22.62 degrees, and the instantaneous flow rate is 0 at the measurement time 2020-01-22 22:00.

Further, the measurement data may include information indicating that the supply temperature is 51.6 degrees, the return temperature is 42.11 degrees, and the instantaneous flow rate is 0.73 at the measurement time 2020-01-22 23:30.

Meanwhile, the information about the supply temperature, the return temperature, and the instantaneous flow rate for the measurement time included in the measurement data may be information measured by different calorimeters or may be information measured at different times by a single calorimeter.

FIG. 5 is a view illustrating another example of measurement data according to an embodiment.

Referring to FIG. 5, the measurement data may include the difference between supply temperature and return temperature, the accumulated flow rate during a first time period (e.g., 60 minutes) set with respect to the measurement time, and the accumulated flow rate during a second time period (e.g., 30 minutes) set with respect to the measurement time, in addition to the supply temperature, return temperature, and instantaneous flow rate for a specific measurement time.

The accumulated flow rate during the first time period means, e.g., the flow rate of the medium supplied to the household from a past time, which is the first time period before a specific measurement time, to the measurement time. If the measurement time is 2020-01-22 22:15 and the first time period is 60 minutes, the accumulated flow rate during the first time period means the flow rate of the medium supplied to the household from 2020-01-22 21:15, which is 60 minutes before the measurement time, to 2020-01-22 22:15 which is the measurement time.

Likewise, the accumulated flow rate during the second time period means, e.g., the flow rate of the medium supplied to the household from a past time, which is the second time period before a specific measurement time, to the measurement time. If the measurement time is 2020-01-22 23:45 and the second time period is 30 minutes, the accumulated flow rate during the second time period means the flow rate of the medium supplied to the household from 2020-01-22 23:15, which is 30 minutes before the measurement time, to 2020-01-22 23:45 which is the measurement time.

In FIG. 5, the measurement data may include information indicating that the supply temperature is 40.51 degrees, the return temperature is 23.09 degrees, and the instantaneous flow rate is 0 at the measurement time, 2020-01-22 22:45, the difference (40.51-23.09) between supply temperature and return temperature is 17.42 degrees, the accumulated flow rate during the first time period is 0, and the accumulated flow rate during the second time period is 0.

The measurement data may include information indicating that the supply temperature is 51.71 degrees, the return temperature is 47.72 degrees, and the instantaneous flow rate is 0.69 at the measurement time, 2020-01-23 0:15, the difference (51.71-47.72) between supply temperature and return temperature is 3.99 degrees, the accumulated flow rate during the first time period is 0.7, and the accumulated flow rate during the second time period is 0.35.

As such, if the measurement data further includes at least one or more of the difference between supply temperature and return temperature, the accumulated flow rate during the first time period (e.g., 60 minutes) set with respect to the measurement time, and the accumulated flow rate during the second time period (e.g., 30 minutes) set with respect to the measurement time, the failure determination device 120 may more accurately determine the failure probability and cause of failure for the plurality of calorimeters. This is why when a calorimeter fails, there is a high chance of mismatch between 1) information about the difference between supply temperature and return temperature, the accumulated flow rate during the first time period (e.g., 60 minutes) set with respect to the measurement time, and the accumulated flow rate during the second time period (e.g., 30 minutes) set with respect to the measurement time, measured by the calorimeter, and 2) information about the supply temperature, return temperature, and instantaneous flow rate.

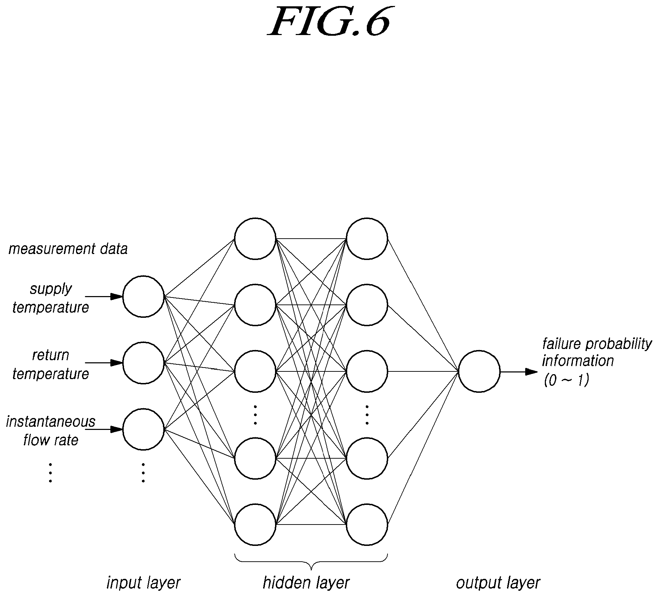

FIG. 6 is a view illustrating a first machine learning model according to an embodiment.

Referring to FIG. 6, the first machine learning model may be an artificial neural network model.

The artificial neural network model may include an input layer, a hidden layer, and an output layer.

The measurement data described in FIGS. 4 to 5 may be input to the input layer of the artificial neural network model. As an example, the supply temperature, return temperature, and instantaneous flow rate measured for a specific measurement time, included in the measurement data, may be input to the input layer of the first machine learning model. As another example, at least one of the difference between supply temperature and return temperature, the accumulated flow rate during the first time period set with respect to the measurement time, and the accumulated flow rate during the second time period set with respect to the measurement time, along with the supply temperature, return temperature, and instantaneous flow rate for the specific measurement time, included in the measurement data, may be additionally input to the input layer of the first machine learning model.

Meanwhile, the number of nodes included in the input layer may be determined depending on the number of types of information indicated by the measurement data. As an example, when the measurement data includes the supply temperature, return temperature, and instantaneous flow rate for the specific measurement time, the number of nodes included in the input layer may be three. As another example, when the measurement data includes the difference between supply temperature and return temperature, the accumulated flow rate during the first time period set with respect to the measurement time, and the accumulated flow rate during the second time period set with respect to the measurement time, along with the supply temperature, return temperature, and instantaneous flow rate for the specific measurement time, the number of nodes included in the input layer may be six.

The hidden layer included in the artificial neural network model may receive the input values from the previous layer (e.g., the input layer or another hidden layer) and calculate a weighted sum, apply the calculated weighted sum to a transition function, and transfer it to the next layer (e.g., another hidden layer or the output layer). The artificial neural network model may include one or more hidden layers.

The output layer may output failure probability information based on a result of calculation at the hidden layer. In this case, the failure probability information may be set to, e.g., a value between 0 and 1. Meanwhile, the output layer may use a preset activation function (e.g., SoftMax function) to convert the result calculated at the hidden layer into failure probability information between 0 and 1.

In embodiments of the present invention, determination of whether it fails may be varied depending on the failure probability information. As an example, the failure probability information being 0.9 or more may be determined as normal, not less than 0.7 and less than 0.9 as highly likely to be normal, not less than 0.5 and less than 0.7 as normal or a failure, not less than 0.3 and less than 0.7 as highly likely to be a failure, and less than 0.3 as a failure.

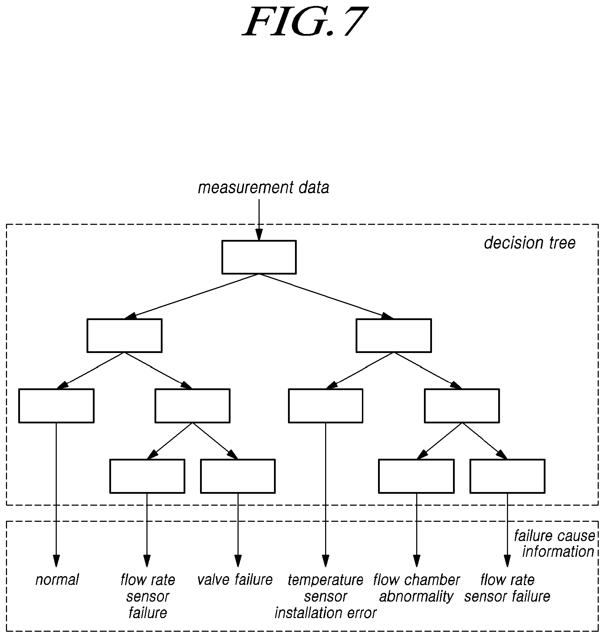

FIG. 7 is a view illustrating a second machine learning model according to an embodiment.

Referring to FIG. 7, the second machine learning model may be a decision tree model. The decision tree model is advantageous in that it provides a criterion for a human to determine why the decision tree model produces the result.

If the above-described measurement data is input to the decision tree model, the decision tree model compares the condition corresponding to the root node with the measurement data and branches it to the next node. Thereafter, it compares the condition corresponding to the next node with the measurement data and branches it to another node. If such process repeats and branching up to the terminal node is completed, the decision tree model may determine the failure cause information (e.g., normal / flow rate sensor failure / valve failure / temperature sensor installation error / flow chamber abnormality / flow rate sensor failure) corresponding to the terminal node.

However, the decision tree model may determine the cause of failure but cannot determine the severity of the failure.

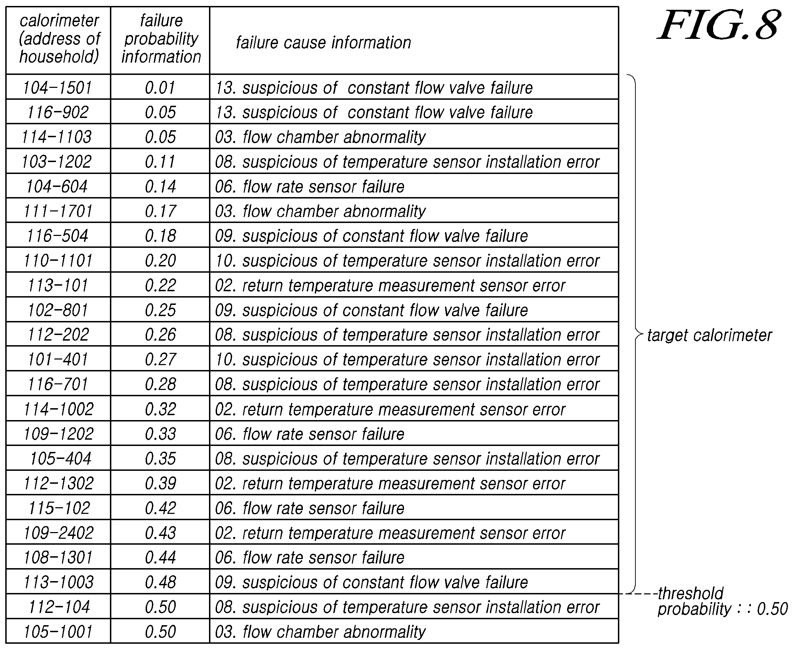

FIG. 8 is a view illustrating an operation of determining a target calorimeter by a priority determination unit 124 according to an embodiment.

Referring to FIG. 8, the priority determination unit 124 may set a calorimeter, where the value of the failure probability information is less than a set threshold probability value, among the plurality of calorimeters, as the target calorimeter.

According to embodiments of the present invention, calorimeters, where the value of the failure probability information is less than the set threshold probability value, among the plurality of calorimeters have a high chance of failure and high severity of failure and thus need to be treated urgently.

On the other hand, calorimeters, where the value of the failure probability information is the set threshold probability value, among the plurality of calorimeters have no or little failure and may not be required to be treated urgently.

Therefore, it is possible to allow a small number of personnel to efficiently maintain and repair a plurality of calorimeters by letting a meter reader to treat only calorimeters highly required to be urgently treated due to a high change of failure and a severe degree of failure.

In FIG. 8, the threshold probability value is assumed to be 0.50. In this case, the priority determination unit 124 may set a calorimeter where the failure probability information is less than the threshold probability value, 0.50, among the plurality of calorimeters, as a target calorimeter.

Thereafter, the priority determination unit 124 may determine the repair priority of the set target calorimeter. In other words, the priority determination unit 124 may determine the repair priority of the target calorimeter so that the calorimeter requiring urgent treatment due to a high-risk failure among the target calorimeters is repaired earlier than the other calorimeters.

Thus, the repair personnel may perform a customized response to the calorimeter highly required to be treated urgently based on the repair priority of the target calorimeter. As an example, when the calorimeter where the flow rate sensor fails has a high repair priority, the calorimeter may be replaced with a new calorimeter. As another example, when the calorimeter with a temperature sensor installation error has a high repair priority, relocation of the temperature sensor in the calorimeter may be performed without replacing the calorimeter. As another example, when the calorimeter with a constant flow valve failure has a high repair priority, a check and replacement may be performed on the constant flow valve installed in the household.

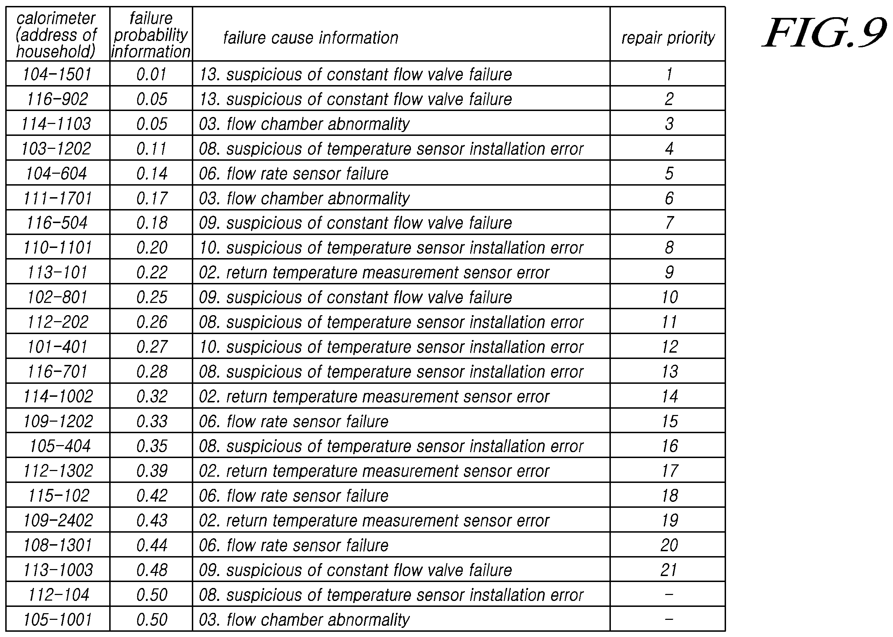

FIG. 9 is a view illustrating an operation of determining a repair priority of a target calorimeter by a priority determination unit according to an embodiment.

Referring to FIG. 9, the priority determination unit 124 may determine the repair priority for the target calorimeter depending on the size of the failure probability information.

As an example, the priority determination unit 124 may assign a higher repair priority to a calorimeter with a smaller failure probability information value among the target calorimeters. This is why as the failure probability information value decreases, the chance of a failure increases, and the severity of failure increases, so that it requires urgent treatment. In this case, the repair priorities of the target calorimeters may be determined in ascending order of failure probability information.

In FIG. 9, among the target calorimeters, the calorimeter 104-1501 having the smallest failure probability information of 0.01 may have the highest repair priority. Further, the calorimeter 116-902 or calorimeter 114-1103 having the next smallest failure probability information of 0.05 may have the next highest repair priority.

In this case, the repair priority between the target calorimeters with the same size of failure probability information may be determined depending on, e.g., the determined failure cause information. In FIG. 9, the calorimeter 116-902 where the failure cause information indicates suspicious of constant flow valve failure may have a higher repair priority than the calorimeter 114-1103 where the failure cause information indicates flow chamber abnormality.

On the other hand, the priority determination unit 124 may determine the repair priority for the target calorimeter in a different manner as that described in connection with FIG. 9.

As an example, the priority determination unit 124 may determine the repair priority for the target calorimeter depending on the type of failure cause information for the target calorimeter and determine the repair priority based on the failure probability information value for the target calorimeters having the same type of failure cause information.

As another example, the priority determination unit 124 may additionally use a separate machine learning model to determine the repair priority of the target calorimeter.

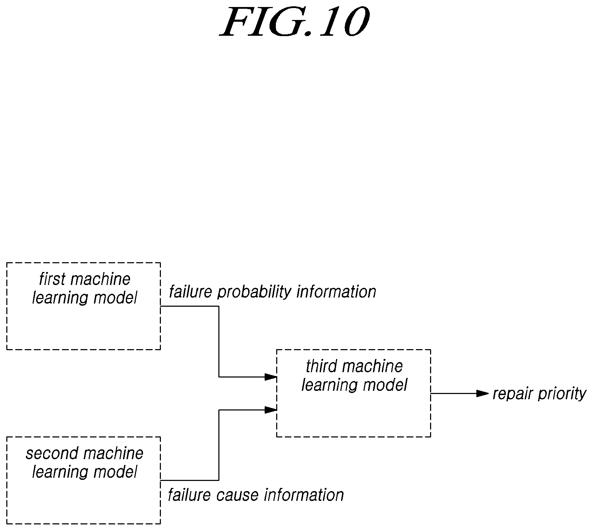

FIG. 10 is a view illustrating an operation of determining a repair priority of a target calorimeter using a third machine learning model by a priority determination unit according to an embodiment.

Referring to FIG. 10, the priority determination unit 124 may input the failure probability information output from the first machine learning model and the failure cause information output from the second machine learning model to the third machine learning model, determining the repair priority for the target calorimeter.

In this case, the third machine learning model may be the same type of machine learning model as the first machine learning model and the second machine learning model or be a different type of machine learning model. For example, the third machine learning model may be random forest, support vector machines (SVMs), linear regression, or logistic regression.

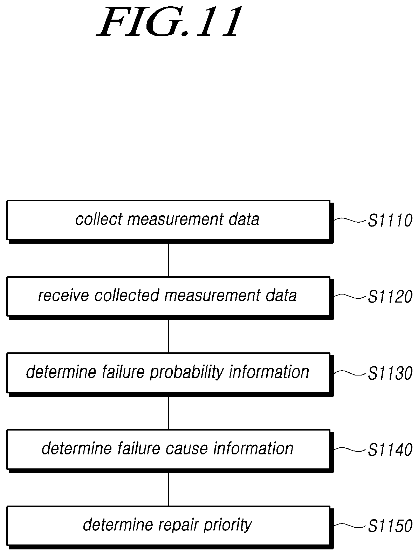

FIG. 11 is a flowchart illustrating a calorimeter abnormality determination method according to an embodiment.

Referring to FIG. 11, the calorimeter abnormality determination method may include the step S1110 of collecting measurement data from a plurality of calorimeters which each measure the calorie consumed by a specific household. Step S1110 may be performed by the above-described collecting device 110.

In this case, the measurement data may include, e.g., the supply temperature, return temperature, and instantaneous flow rate for a specific measurement time.

As another example, the measurement data may include the difference between supply temperature and return temperature, the accumulated flow rate during the first time period set with respect to the measurement time, and the accumulated flow rate during the second time period set with respect to the measurement time, as well as the supply temperature, return temperature, and instantaneous flow rate for the specific measurement time.

The calorimeter abnormality determination method may include the step S1120 of receiving the measurement data collected in step S1110. Step S1120 may be performed by the above-described receiving unit 121.

The calorimeter abnormality determination method may include the step S1130 of inputting the measurement data received in step S1120 to the first machine learning model to determine failure probability information about the plurality of calorimeters. Step S1130 may be performed by the above-described failure probability determination unit 122.

In this case, the first machine learning model may be, e.g., an artificial neural network model.

The calorimeter abnormality determination method may include the step S1140 of inputting the measurement data received in step S1120 to the second machine learning model to determine failure cause information about the plurality of calorimeters. Step S1140 may be performed by the above-described failure cause determination unit 123.

In this case, the second machine learning model may be, e.g., a decision tree model.

Meanwhile, although FIG. 11 illustrates an example in which step S1140 is executed after step S1130, the order of executing steps S1130 and S1140 is not necessarily limited thereto. As an example, step S1140 may be executed before step S1130. As another example, steps S1130 and S1140 may be simultaneously executed.

The calorimeter abnormality determination method may include the step S1150 of determining repair priority for target calorimeters which are one or more calorimeters among the plurality of calorimeters based on at least one of the failure probability information determined in step S1130 and the failure cause information determined in step S1140. Step S1150 may be performed by the above-described priority determination unit 124.

In this case, the target calorimeter may be set as a calorimeter where the failure probability information value is less than a set threshold probability value, among the plurality of calorimeters.

Step S1150 may determine the repair priority for the target calorimeter depending on the size of the failure probability information determined in step S1130, as an example.

As another example, step S1150 may input the failure probability information determined in step S1130 and the failure cause information determined in step S1140 to the third machine learning model to determine the repair priority for the target calorimeter.

The above-described calorimeter abnormality determination device 100 may be implemented by a computing device including at least some of a processor, a memory, a user input device, and a presentation device. The memory is a medium that stores computer-readable software, applications, program modules, routines, instructions, and/or data, coded to perform specific tasks when executed by a processor. The processor may read and execute the computer-readable software, applications, program modules, routines, instructions, and/or data stored in the memory. The user input device may be a means for allowing the user to input a command to the processor to execute a specific task or to input data required for the execution of the specific task. The user input device may include a physical or virtual keyboard or keypad, key button, mouse, joystick, trackball, touch-sensitive input means, or a microphone. The presentation device may include, e.g., a display, a printer, a speaker, or a vibrator.

The computing device may include various devices, such as smartphones, tablets, laptops, desktops, servers, clients, and the like. The computing device may be a single stand-alone device and may include a plurality of computing devices operating in a distributed environment composed of a plurality of computing devices cooperating with each other through a communication network.

Further, the above-described calorimeter abnormality determination method is executed by a computing device that includes a processor and a memory storing computer readable software, applications, program modules, routines, instructions, and/or data structures, coded to perform the above-described calorimeter abnormality determination method utilizing a deep learning model when executed by the processor.

The present embodiments described above may be implemented through various means. For example, the present embodiments may be implemented by various means, e.g., hardware, firmware, software, or a combination thereof.

When implemented in hardware, the calorimeter abnormality determination device and method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the calorimeter abnormality determination method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

Meanwhile, another embodiment provides a computer program stored in a computer recording medium for performing the above-described calorimeter abnormality determination method. Further, another embodiment provides a computer-readable recording medium storing a program for realizing the above-described calorimeter abnormality determination method.

The program recorded on the recording medium may be read, installed, and executed by a computer to execute the above-described steps.

As such, for the computer to read the program recorded on the recording medium and execute the implemented functions with the program, the above-described program may include code coded in a computer language, such as C, C++, JAVA, or machine language, which the processor (CPU) of the computer may read through a computer device interface.

Such code may include a function code related to a function defining the above-described functions or may include an execution procedure-related control code necessary for the processor of the computer to execute the above-described functions according to a predetermined procedure.

Further, the code may further include additional information necessary for the processor of the computer to execute the above-described functions or memory reference-related code as to the position (or address) in the internal or external memory of the computer the media should reference.

Further, when the processor of the computer needs to communicate with, e.g., another computer or a server at a remote site to execute the above-described functions, the code may further include communication-related code as to how the processor of the computer should communicate with the remote computer or server using the communication module of the computer and what information or media should be transmitted/received upon communication.

The above-described computer-readable recording medium may include, e.g., ROMs, RAMs, CD-ROMs, magnetic tapes, floppy disks, or optical data storage devices, or may also include carrier wave-type implementations (e.g., transmissions through the Internet).

Further, the computer-readable recording medium may be distributed to computer systems connected via a network, and computer-readable codes may be stored and executed in a distributed manner.

The functional programs for implementing the present invention and code and code segments related thereto may easily be inferred or changed by programmers of the technical field to which the present invention pertains, considering, e.g., the system environments of the computer reading and executing the program.

### [reference numbers]

100: calorimeter abnormality determination device
110: collecting device
120: failure determination device
121: receiving unit
122: failure probability determination unit
123: failure cause determination unit
124: priority determination unit

### CROSS-REFERENCE TO RELATED APPLICATION

This application claims priority under 35 U.S.C. 119(a) to Korean Patent Application No. 10-2021-0157409 filed in the Korean Intellectual Property Office on November 16, 2021.

## Claims

1. A device for determining an abnormality in a calorimeter, comprising:
a collecting device (110) collecting measurement data from a plurality of calorimeters each measuring a calorie consumed in a specific household; and
a failure determination device (120) determining a failure probability and a cause of failure for the plurality of calorimeters based on the measurement data, wherein the failure determination device includes:
a receiving unit (121) receiving the measurement data from the collecting device;
a failure probability determination unit (122) inputting the measurement data to a first machine learning model to determine failure probability information about the plurality of calorimeters;
a failure cause determination unit (123) inputting the measurement data to a second machine learning model to determine failure cause information about the plurality of calorimeters, wherein the second machine learning model is different from the first machine learning model; and
a repair priority determination unit (124) determining a priority for a target calorimeter, which is one or more calorimeters among the plurality of calorimeters, based on the failure probability information and the failure cause information.

2. The device of claim 1, wherein the measurement data includes a supply temperature, a return temperature, or an instantaneous flow rate for a specific measurement time.

3. The device of claim 2, wherein the measurement data additionally includes a difference between the supply temperature and the return temperature, an accumulated flow rate during a first time period set with respect to the measurement time, and an accumulated flow rate during a second time period set with respect to the measurement time.

4. The device of claim 1, wherein the first machine learning model is an artificial neural network model.

5. The device of claim 1, wherein the second machine learning model is a decision tree model.

6. The device of claim 1, wherein the priority determination unit sets a calorimeter, where a value of the failure probability information is less than a threshold probability value, among the plurality of calorimeters, as the target calorimeter.

7. The device of claim 6, wherein the priority determination unit determines a repair priority for the target calorimeter depending on a size of the failure probability information.

8. The device of claim 1, wherein the priority determination unit inputs the failure probability information and the failure cause information to a third machine learning model to determine the repair priority for the target calorimeter.

9. A computer-implemented method for determining an abnormality in a calorimeter, the method comprising:
collecting measurement data from a plurality of calorimeters each measuring a calorie consumed in a specific household;
receiving the measurement data;
inputting the measurement data to a first machine learning model to determine failure probability information about the plurality of calorimeters;
inputting the measurement data to a second machine learning model to determine failure cause information about the plurality of calorimeters, wherein the second machine learning model is different from the first machine learning model; and
determining a repair priority for a target calorimeter, which is one or more calorimeters among the plurality of calorimeters, based on the failure probability information and the failure cause information.

10. The method of claim 9, wherein the measurement data includes a supply temperature, a return temperature, or an instantaneous flow rate for a specific measurement time.

11. The method of claim 10, wherein the measurement data additionally includes a difference between the supply temperature and the return temperature, an accumulated flow rate during a first time period set with respect to the measurement time, and an accumulated flow rate during a second time period set with respect to the measurement time.

12. The method of claim 9, wherein the first machine learning model is an artificial neural network model.

13. The method of claim 9, wherein the second machine learning model is a decision tree model.

14. The method of claim 9, wherein the target calorimeter is set as a calorimeter, where a value of the failure probability information is less than a threshold probability value, among the plurality of calorimeters.

15. The method of claim 9, wherein determining the repair priority for the target calorimeter inputs the failure probability information and the failure cause information to a third machine learning model to determine the repair priority for the target calorimeter.

## Patentansprüche

1. Vorrichtung zum Bestimmen einer Anomalie in einem Kalorimeter, umfassend:
eine Sammelvorrichtung (110), die Messdaten von einer Vielzahl von Kalorimetern sammelt, die jeweils eine in einem bestimmten Haushalt verbrauchte Kalorie misst; und
eine Fehlerbestimmungsvorrichtung (120), die eine Fehlerwahrscheinlichkeit und eine Fehlerursache für die Vielzahl von Kalorimetern basierend auf den Messdaten bestimmt, wobei die Fehlerbestimmungsvorrichtung Folgendes umfasst:
eine Empfangseinheit (121), die die Messdaten von der Sammelvorrichtung empfängt;
eine Fehlerwahrscheinlichkeitsbestimmungseinheit (122), die die Messdaten in ein erstes maschinelles Lernmodell eingibt, um Fehlerwahrscheinlichkeitsinformationen über die Vielzahl von Kalorimetern zu bestimmen;
eine Fehlerursachenbestimmungseinheit (123), die die Messdaten in ein zweites maschinelles Lernmodell eingibt, um Fehlerursacheninformationen über die Vielzahl von Kalorimetern zu bestimmen, wobei sich das zweite maschinelle Lernmodell vom ersten maschinellen Lernmodell unterscheidet; und
eine Reparaturprioritätsbestimmungseinheit (124), die eine Priorität für ein Zielkalorimeter, das ein oder mehrere Kalorimeter unter der Vielzahl von Kalorimetern ist, basierend auf den Fehlerwahrscheinlichkeitsinformationen und den Fehlerursacheninformationen bestimmt.

2. Vorrichtung nach Anspruch 1, wobei die Messdaten eine Vorlauftemperatur, eine Rücklauftemperatur oder eine momentane Durchflussrate für eine bestimmte Messzeit enthalten.

3. Vorrichtung nach Anspruch 2, wobei die Messdaten zusätzlich eine Differenz zwischen der Vorlauftemperatur und der Rücklauftemperatur, eine akkumulierte Durchflussrate während eines ersten Zeitraums, der hinsichtlich der Messzeit eingestellt ist, und eine akkumulierte Durchflussrate während eines zweiten Zeitraums, der hinsichtlich der Messzeit eingestellt ist, enthalten.

4. Vorrichtung nach Anspruch 1, wobei das erste maschinelle Lernmodell ein künstliches neuronales Netzwerkmodell ist.

5. Vorrichtung nach Anspruch 1, wobei das zweite maschinelle Lernmodell ein Entscheidungsbaummodell ist.

6. Vorrichtung nach Anspruch 1, wobei die Prioritätsbestimmungseinheit ein Kalorimeter, bei dem ein Wert der Fehlerwahrscheinlichkeitsinformationen kleiner als ein Schwellenwahrscheinlichkeitswert ist, unter der Vielzahl von Kalorimetern als das Zielkalorimeter einstellt.

7. Vorrichtung nach Anspruch 6, wobei die Prioritätsbestimmungseinheit eine Reparaturpriorität für das Zielkalorimeter in Abhängigkeit von einer Größe der Fehlerwahrscheinlichkeitsinformationen bestimmt.

8. Vorrichtung nach Anspruch 1, wobei die Prioritätsbestimmungseinheit die Fehlerwahrscheinlichkeitsinformationen und die Fehlerursacheninformationen in ein drittes maschinelles Lernmodell eingibt, um die Reparaturpriorität für das Zielkalorimeter zu bestimmen.

9. Computerimplementiertes Verfahren zum Bestimmen einer Anomalie in einem Kalorimeter, wobei das Verfahren Folgendes umfasst:
Sammeln von Messdaten von einer Vielzahl von Kalorimetern, die jeweils eine in einem bestimmten Haushalt verbrauchte Kalorie misst;
Empfangen der Messdaten;
Eingeben der Messdaten in ein erstes maschinelles Lernmodell, um Fehlerwahrscheinlichkeitsinformationen über die Vielzahl von Kalorimetern zu bestimmen;
Eingeben der Messdaten in ein zweites maschinelles Lernmodell, um Fehlerursacheninformationen über die Vielzahl von Kalorimetern zu bestimmen, wobei sich das zweite maschinelle Lernmodell vom ersten maschinellen Lernmodell unterscheidet; und
Bestimmen einer Reparaturpriorität für ein Zielkalorimeter, das ein oder mehrere Kalorimeter unter der Vielzahl von Kalorimetern ist, basierend auf den Fehlerwahrscheinlichkeitsinformationen und den Fehlerursacheninformationen.

10. Verfahren nach Anspruch 9, wobei die Messdaten eine Vorlauftemperatur, eine Rücklauftemperatur oder eine momentane Durchflussrate für eine bestimmte Messzeit enthalten.

11. Verfahren nach Anspruch 10, wobei die Messdaten zusätzlich eine Differenz zwischen der Vorlauftemperatur und der Rücklauftemperatur, eine akkumulierte Durchflussrate während eines ersten Zeitraums, der hinsichtlich der Messzeit eingestellt ist, und eine akkumulierte Durchflussrate während eines zweiten Zeitraums, der hinsichtlich der Messzeit eingestellt ist, enthalten.

12. Verfahren nach Anspruch 9, wobei das erste maschinelle Lernmodell ein künstliches neuronales Netzwerkmodell ist.

13. Verfahren nach Anspruch 9, wobei das zweite maschinelle Lernmodell ein Entscheidungsbaummodell ist.

14. Verfahren nach Anspruch 9, wobei das Zielkalorimeter als ein Kalorimeter, bei dem ein Wert der Fehlerwahrscheinlichkeitsinformationen kleiner als ein Schwellenwahrscheinlichkeitswert ist, unter der Vielzahl von Kalorimetern eingestellt ist.

15. Verfahren nach Anspruch 9, wobei das Bestimmen der Reparaturpriorität für das Zielkalorimeter die Fehlerwahrscheinlichkeitsinformationen und die Fehlerursacheninformationen in ein drittes maschinelles Lernmodell eingibt, um die Reparaturpriorität für das Zielkalorimeter zu bestimmen.

## Revendications

1. Dispositif pour déterminer une anomalie dans un calorimètre, comportant :
un dispositif de collecte (110) collectant des données de mesure à partir d'une pluralité de calorimètres mesurant chacun une calorie consommée dans un ménage spécifique ; et
un dispositif de détermination de défaillance (120) déterminant une probabilité de défaillance et une cause de défaillance pour la pluralité de calorimètres sur la base des données de mesure, dans lequel le dispositif de détermination de défaillance inclut :
une unité de réception (121) recevant les données de mesure à partir du dispositif de collecte ;
une unité de détermination de probabilité de défaillance (122) entrant les données de mesure dans un premier modèle d'apprentissage automatique pour déterminer des informations de probabilité de défaillance concernant la pluralité de calorimètres ;
une unité de détermination de cause de défaillance (123) entrant les données de mesure dans un deuxième modèle d'apprentissage automatique pour déterminer des informations de cause de défaillance concernant la pluralité de calorimètres, dans lequel le deuxième modèle d'apprentissage automatique est différent du premier modèle d'apprentissage automatique ; et
une unité de détermination de priorité de réparation (124) déterminant une priorité pour un calorimètre cible, qui est un ou plusieurs calorimètres parmi la pluralité de calorimètres, sur la base des informations de probabilité de défaillance et des informations de cause de défaillance.

2. Dispositif selon la revendication 1, dans lequel les données de mesure incluent une température d'alimentation, une température de retour ou un débit instantané pour un temps de mesure spécifique.

3. Dispositif selon la revendication 2, dans lequel les données de mesure incluent en outre une différence entre la température d'alimentation et la température de retour, un débit accumulé pendant une première période de temps définie par rapport au temps de mesure, et un débit accumulé pendant une deuxième période de temps définie par rapport au temps de mesure.

4. Dispositif selon la revendication 1, dans lequel le premier modèle d'apprentissage automatique est un modèle de réseau neuronal artificiel.

5. Dispositif selon la revendication 1, dans lequel le deuxième modèle d'apprentissage automatique est un modèle d'arbre de décision.

6. Dispositif selon la revendication 1, dans lequel l'unité de détermination de priorité définit un calorimètre, où une valeur des informations de probabilité de défaillance est inférieure à une valeur de probabilité de seuil, parmi la pluralité de calorimètres, en tant que calorimètre cible.

7. Dispositif selon la revendication 6, dans lequel l'unité de détermination de priorité détermine une priorité de réparation pour le calorimètre cible en fonction d'une taille des informations de probabilité de défaillance.

8. Dispositif selon la revendication 1, dans lequel l'unité de détermination de priorité entre les informations de probabilité de défaillance et les informations de cause de défaillance dans un troisième modèle d'apprentissage automatique pour déterminer la priorité de réparation pour le calorimètre cible.

9. Procédé mis en œuvre par ordinateur pour déterminer une anomalie dans un calorimètre, le procédé comportant :
la collecte de données de mesure à partir d'une pluralité de calorimètres mesurant chacun une calorie consommée dans un ménage spécifique ;
la réception des données de mesure ;
l'entrée des données de mesure dans un premier modèle d'apprentissage automatique pour déterminer des informations de probabilité de défaillance concernant la pluralité de calorimètres ;
l'entrée des données de mesure dans un deuxième modèle d'apprentissage automatique pour déterminer des informations de cause de défaillance concernant la pluralité de calorimètres, dans lequel le deuxième modèle d'apprentissage automatique est différent du premier modèle d'apprentissage automatique ; et
la détermination d'une priorité de réparation pour un calorimètre cible, qui est un ou plusieurs calorimètres parmi la pluralité de calorimètres, sur la base des informations de probabilité de défaillance et des informations de cause de défaillance.

10. Procédé selon la revendication 9, dans lequel les données de mesure incluent une température d'alimentation, une température de retour ou un débit instantané pour un temps de mesure spécifique.

11. Procédé selon la revendication 10, dans lequel les données de mesure incluent en outre une différence entre la température d'alimentation et la température de retour, un débit accumulé pendant une première période de temps définie par rapport au temps de mesure, et un débit accumulé pendant une deuxième période de temps définie par rapport au temps de mesure.

12. Procédé selon la revendication 9, dans lequel le premier modèle d'apprentissage automatique est un modèle de réseau neuronal artificiel.

13. Procédé selon la revendication 9, dans lequel le deuxième modèle d'apprentissage automatique est un modèle d'arbre de décision.

14. Procédé selon la revendication 9, dans lequel le calorimètre cible est défini comme un calorimètre, où une valeur des informations de probabilité de défaillance est inférieure à une valeur de probabilité de seuil, parmi la pluralité de calorimètres.

15. Procédé selon la revendication 9, dans lequel la détermination de la priorité de réparation pour le calorimètre cible entre les informations de probabilité de défaillance et les informations de cause de défaillance dans un troisième modèle d'apprentissage automatique pour déterminer la priorité de réparation pour le calorimètre cible.
